# EUROPÄISCHE PATENTSCHRIFT

(11) **EP 2 528 708 B1**
(45) Veröffentlichungstag und Bekanntmachung des Hinweises auf die Patenterteilung: **12.03.2014**
(21) Anmeldenummer: 10800750.1
(22) Anmeldetag: 23.12.2010
(51) Int. Cl.: B23K 26/08, B23K 26/24, B23K 31/02, B23K 37/04, B21C 47/00, B21C 47/26, B21C 47/34, B65H 23/02

(54) **VORRICHTUNG UND VERFAHREN ZUM FÜHREN VON MITEINANDER ENTLANG IHRER LÄNGSKANTEN ZU FÜGENDER BÄNDER UNTER VERWENDUNG VON UMLENKROLLEN**
DEVICE AND METHOD FOR GUIDING BANDS TO BE JOINED TO EACH OTHER ALONG THE LONGITUDINAL EDGES THEREOF USING GUIDE ROLLERS
DISPOSITIF ET PROCÉDÉ DE GUIDAGE DE BANDES À ASSEMBLER ENTRE ELLES LE LONG DE LEURS ARÊTES LONGITUDINALES À L'AIDE DE POULIES DE RENVOI

(30) Priorität: 25.01.2010 DE 102010005758
(43) Veröffentlichungstag der Anmeldung: 05.12.2012
(73) Patentinhaber: WISCO Lasertechnik GmbH, 88212 Ravensburg (DE); WISCO Tailored Blanks GmbH, 47259 Duisburg (DE)
(72) Erfinder: RETZBACH, Martin, 88212 Ravensburg (DE); WISCHMANN, Stefan, 10437 Berlin (DE); PLHA, Jens, 40468 Düsseldorf (DE); MÜHLHAUSE, Walter, 47608 Geldern (DE)
(74) Vertreter: Otten, Roth, Dobler & Partner
(86) Internationale Anmeldenummer: PCT/EP2010/070685
(87) Internationale Veröffentlichungsnummer: WO 2011/088951

(56) Entgegenhaltungen:
- DE-A1- 4 215 252
- DE-C1- 4 022 062
- US-A- 1 795 137
- US-A1- 2002 029 785

## Beschreibung

Die Erfindung betrifft eine Vorrichtung zum Führen von miteinander entlang ihrer Längskanten zu fügender Bänder, mit mindestens zwei zueinander versetzt angeordneten Umlenkrollen für mindestens eines der Bänder. Führer betrifft die Erfindung ein Verfahren zum Führen von miteinander entlang ihrer Längskanten zu fügender Bänder, bei dem im Wesentlichen parallel mit Abstand zueinander laufende Bänder über Umlenkrollen zu einer Fügestelle geleitet werden.

Bei der Bandführung für Fügeanlagen, insbesondere Schweißanlagen zur Herstellung endlicher oder endloser Bänder existiert üblicherweise die verfahrenstechnische Notwendigkeit eines keilförmigen Fügewinkels (Einlaufwinkels) zwischen den miteinander entlang ihrer Längskanten zu fügenden Bändern (Fügepartnern) bei anschließender Parallelität der Längskanten hinter dem Fügepunkt.

Es sind verschiedene Vorrichtungen zur Bandführung bekannt, mit denen sich flache Bänder unterschiedlicher Dicke, Breite und/oder Materialgüte entlang ihrer Längskanten zu endlichen bzw. endlosen Bändern auf Stoß verschweißen lassen.

Aus der DE 40 22 062 C1, die ein Verfahren und eine Vorrichtung gemäß dem Oberbegriff der Ansprüche 7 und 1 entspricht, ist eine Vorrichtung zum geregelten Führen von Bändern und Stumpfschweißen entlang ihrer Längskanten bekannt, die achsbeweglich steuerbare Umlenkrollen für jedes Band aufweist, von denen die in Laufrichtung des Bandes vor der Schweißstelle letzten Umlenkrollen mit ihren parallelen Achsen soweit gegeneinander höhenverstellbar sind, dass die über die Umlenkrollen geführten Bänder mit ihren Längskanten in der für die Verschweißung gewünschten Position zueinander stehen und in derselben Vertikalebene liegen. Seitlich sind die vor der Schweißstelle letzten Umlenkrollen soweit gegeneinander versetzt, dass zwischen ihren gegenüberliegenden Endflächen ein Abstand verbleibt, wobei der Schweißstrahl einer Laserschweißeinrichtung auf die Schweißstelle zwischen den letzten Umlenkrollen gerichtet ist. Eine dieser letzten Umlenkrollen ist in ihrer Höhenlage und die andere in ihrer Axialrichtung verschiebbar gelagert.

In der JP 11285874 A ist eine Vorrichtung zum Führen von Stahlbändern und kontinuierlichen Stumpffügen entlang ihrer Längskanten mittels Laserverschweißung offenbart. Dabei werden zwei Stahlbänder so geführt, dass sie sich unter Bildung eines keilförmigen Füge- oder Einlaufwinkels in der gleichen Transportebene einander annähern und ihre miteinander zu verschweißenden Längskanten ab dem Berührungspunkt ohne Spalt und ohne Überlappung aneinander liegen. Hierzu weist die Vorrichtung für jedes der beiden Bänder mehrere Transportrollen vor der Schweißstelle auf, die eine gemeinsame Transportebene definieren. Ferner ist ein erstes horizontales Führungselement vorgesehen, an dem ein erstes der beiden Bänder mit seiner zu verschweißenden Längskante anliegt, wobei dieses erste Band durch ein weiteres (erstes) horizontales Führungselement, das gegen die äußere, nicht zu verschweißende Längskante des Bandes drückt, auf die durch die Schweißstelle verlaufende Achse geführt wird. Kurz vor dem Berührungspunkt der beiden Bänder wird die zu verschweißende Längskante des anderen bzw. zweiten Bandes mittels eines weiteren bzw. zweiten horizontalen Führungselements, das gegen die äußere, nicht zu verschweißende Längskante des zweiten Bandes drückt, gegen die zu verschweißende Längskante des ersten Bandes gedrückt. Zudem kann mindestens eine der letzten Transportrollen vor dem Berührungspunkt der beiden Bänder schräg zur Laufrichtung des Bandes ausgerichtet werden, um das Band gegen das andere Band zu lenken.

Werden relativ dicke Bänder und/oder Bänder mit hoch- bzw. höchstfesten Güten miteinander entlang ihrer Längskanten kontinuierlich zu endlichen oder endlosen Bändern stumpf verschweißt, so lässt sich der keilförmige Fügewinkel (Einlaufwinkel) üblicherweise nicht ohne plastische Deformation mindestens eines der Bänder und damit nicht gewünschten Änderungen der mechanischen Eigenschaften einstellen, dies gilt insbesondere für die aus der JP 11285874 A bekannte Vorrichtung.

Der vorliegenden Erfindung liegt die Aufgabe zugrunde, eine Vorrichtung und ein Verfahren der eingangs genannten Art anzugeben, die es ermöglichen, den notwendigen keilförmigen Fügewinkel (Öffnungswinkel) auch beim Fügen relativ dicker Bänder und/oder Bänder mit hochfesten Güten zu realisieren, ohne dass es dabei zu einer plastischen Deformation eines der Bänder kommt.

Zur Lösung dieser Aufgabe wird eine Vorrichtung mit den Merkmalen des Anspruchs 1 vorgeschlagen. Die erfindungsgemäße Vorrichtung weist mindestens zwei zueinander versetzt angeordnete Umlenkrollen für mindestens eines der Bänder auf, wobei die der Fügestelle näherliegende Umlenkrolle als Konusrolle ausgeführt ist, die sich in Richtung der zu fügenden Längskante des Bandes verjüngt, wobei die dieser Konusrolle in Laufrichtung des Bandes vorgeordnete Umlenkrolle ebenfalls als Konusrolle oder als Umlenkrolle mit zylindrischer Mantelfläche ausgeführt ist, und wobei sich die letztgenannte Konusrolle in Richtung der anderen Längskante des Bandes verjüngt oder die Drehachse der eine zylindrische Mantelfläche aufweisenden Umlenkrolle sich der Drehachse der in Laufrichtung des Bandes nachgeordneten Konusrolle auf der der zu fügenden Längskante gegenüberliegenden Kantenseite des Bandes räumlich annähert.

Durch diese Rollenanordnung unter Verwendung mindestens einer Konusrolle lässt sich der notwendige keilförmige Fügewinkel (Öffnungswinkel) auch beim Fügen relativ dicker Bänder und/oder Bänder mit hochfesten Güten realisieren, ohne dass es zu einer plastischen Deformation eines der Bänder kommt.

Eine vorteilhafte Ausgestaltung der erfindungsgemäßen Vorrichtung besteht darin, dass mindestens eine der Umlenkrollen als achsbeweglich steuerbare Umlenkrolle oder Konusrolle ausgeführt ist, so dass sie im Wesentlichen radial, insbesondere horizontal verschiebbar ist. Durch eine entsprechende Verschiebung bzw. räumliche Lageveränderung der Umlenkrolle, die als Konusrolle oder mit zylindrischer Mantelfläche ausgeführt ist, wird der Umschlingungswinkel des Bandes an den Umlenkrollen geändert bzw. eingestellt. Hierdurch lässt sich gleichzeitig der keilförmige Fügewinkel zwischen den miteinander zu verbindenden Bändern einstellen.

Eine weitere bevorzugte Ausgestaltung der erfindungsgemäßen Vorrichtung sieht vor, dass die der Fügestelle näherliegende Konusrolle als höhenbewegliche Konusrolle ausgeführt ist. Diese Ausgestaltung ermöglicht beim Fügen von Bändern unterschiedlicher Dicke die Lage des Dickensprungs frei zu wählen.

Vorzugsweise werden die beiden entlang ihrer Längskanten zu fügenden Bänder jeweils in gleicher Weise geführt. Die erfindungsgemäße Vorrichtung umfasst somit vorzugsweise mindestens zwei weitere zueinander versetzt angeordnete Umlenkrollen für das zweite Band der miteinander zu fügenden Bänder, wobei die der Fügestelle näherliegende Umlenkrolle wiederum als Konusrolle ausgeführt ist, die sich in Richtung der zu fügenden Längskante des zweiten Bandes verjüngt, wobei die dieser Konusrolle in Laufrichtung des zweiten Bandes vorgeordnete Umlenkrolle ebenfalls als Konusrolle oder als Umlenkrolle mit zylindrischer Mantelfläche ausgeführt ist, und wobei sich diese letztgenannte Konusrolle in Richtung der anderen Längskante des zweiten Bandes verjüngt oder die Drehachse der eine zylindrische Mantelfläche aufweisenden Umlenkrolle sich der Drehachse der in Laufrichtung des zweiten Bandes nachgeordneten Konusrolle auf der der zu fügenden Längskante gegenüberliegenden Kantenseite des zweiten Bandes räumlich annähert.

In verfahrenstechnischer Hinsicht wird die oben genannte Aufgabe durch ein Verfahren mit den Merkmalen des Anspruchs 7 gelöst. Entsprechend der erfindungsgemäßen Vorrichtung ist das erfindungsgemäße Verfahren, bei dem im Wesentlichen parallel mit Abstand zueinander laufende Bänder über Umlenkrollen zu einer Fügestelle geleitet werden, dadurch gekennzeichnet, dass mindestens eines der Bänder mittels einer Konusrolle oder einer eine zylindrische Mantelfläche aufweisenden Umlenkrolle derart umgelenkt wird, dass es auf das andere Band zuläuft und mit letzterem einen keilförmigen Fügewinkel definiert, wobei das umgelenkte Band sodann mittels einer Konusrolle, die sich in Richtung der zu fügenden Längskante des Bandes verjüngt, derart umgelenkt wird, dass sich die zu fügenden Bänder entlang ihrer Längskanten berühren und dann parallel zueinender laufen. Falls notwendig, kann eine Vorpositionierung der Bänder erfolgen, um insbesondere Bandungenauigkeiten auszugleichen.

Vorzugsweise werden die Bänder jeweils mittels einer Konusrolle oder einer eine zylindrische Mantelfläche aufweisenden Umlenkrolle derart umgelenkt, dass sie auf das andere Band zulaufen und zusammen einen keilförmigen Fügewinkel definieren, wobei die umgelenkten Bänder sodann jeweils mittels einer Konusrolle, die sich in Richtung der zu fügenden Längskante des jeweiligen Bandes verjüngt, derart umgelenkt werden, dass sich die zu fügenden Bänder entlang ihrer Längskanten berühren und dann parallel zueinender laufen.

Erfolgt das Schweißen unter Verwendung eines Lasers, muss gewährleistet sein, dass sich ein technischer Nullspalt einstellt. Alternativ kann das Schweißen auch mittels Hochfrequenz erfolgen. Hierbei muss jedoch eine definierte Kraft im Berührungspunkt der zu verschweißenden Längskanten aufgebracht werden, um einen fehlerfreien Stoffschluss der zu verbindenden Kanten zu gewährleisten. Die aufzubringende definierte Kraft kann nach Bedarf ermittelt werden und ist insbesondere an das zu verschweissende Material anzupassen. Die definierte Kraft entspricht maximal der Streckgrenze der zu verschweißenden Materialien bei Raumtemperatur, wobei zu beachten ist, dass in der Wärmeeinflusszone die Streckgrenze mit Erhöhung der Temperatur abnimmt, um einen realen Nullspalt zu gewährleisten.

Der keilförmige Fügewinkel lässt sich bei dem erfindungsgemäßen Verfahren durch radiales, insbesondere horizontales Verschieben der Umlenkrolle oder Umlenkrollen gegenüber der oder den der Fügestelle näherliegenden Konusrollen einstellen.

Die erfindungsgemäße Bandführung zeichnet sich somit durch ein keilförmiges Fügen aus. Sie bietet insbesondere die Möglichkeit, den Fügewinkel zu verstellen. Ferner ist die erfindungsgemäße Bandführung unabhängig von linearen Fügekanten einsetzbar.

Weitere bevorzugte und vorteilhafte Ausgestaltungen der erfindungsgemäßen Vorrichtung bzw. des erfindungsgemäßen Verfahrens sind in den Unteransprüchen angegeben.

Die Bänder können spannungsfrei geführt werden, oder mit Zug beaufschlagt werden.

Nachfolgend wird die Erfindung anhand einer mehrere Ausführungsbeispiele darstellenden Zeichnung näher erläutert. Es zeigen in schematischer Darstellung:
- Fig. 1: ein erstes Ausführungsbeispiel einer erfindungsgemäßen Vorrichtung mit zwei Konusrollenpaaren zum Führen von miteinander entlang ihrer Längskanten zu fügender Bänder, in Seitenansicht;
- Fig. 2: die Vorrichtung der Fig. 1 in einer Vorderansicht;
- Fig. 3: die Vorrichtung der Fig. 1 in einer perspektivischen Vorderansicht;
- Fig. 4: die Vorrichtung der Fig. 1 wiederum in Seitenansicht, wobei jedoch die unteren Konusrollen gegenüber den oberen Konusrollen verschoben sind, so dass der jeweilige Umschlingungswinkel gegenüber der in Fig. 1 dargestellten Einstellung vergrößert ist;
- Fig. 5: die Vorrichtung mit der Einstellung der Konusrollen gemäß Fig. 4 in einer Vorderansicht; und
- Fig. 6: ein weiteres Ausführungsbeispiel einer erfindungsgemäßen Vorrichtung mit zwei zylindrischen Umlenkrollen und zwei in Bandlaufrichtung nachfolgenden Konusrollen zum Führen von miteinander entlang ihrer Längskanten zu fügender Bänder, in einer Vorderansicht.

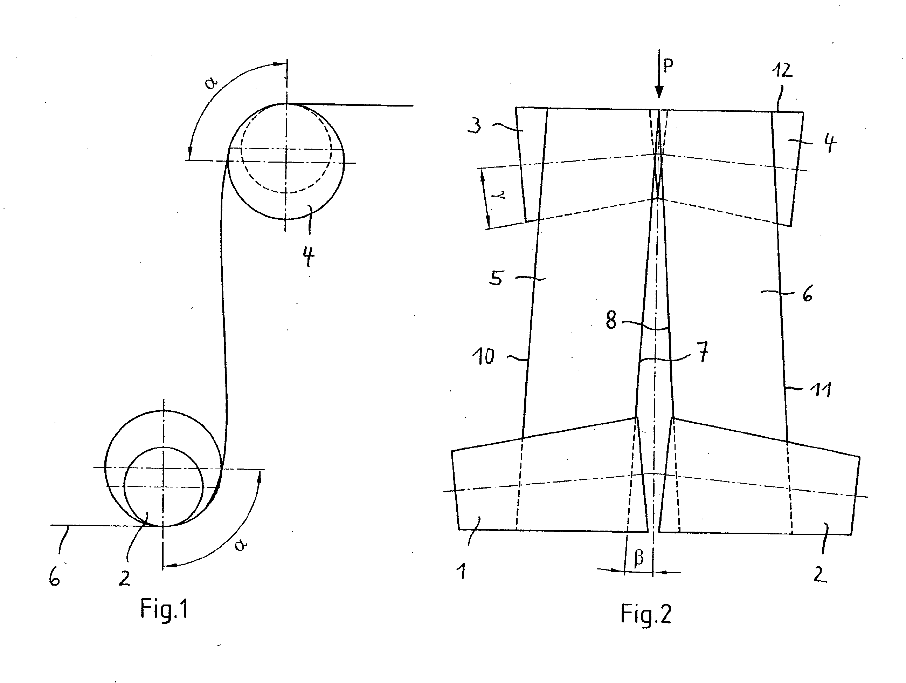

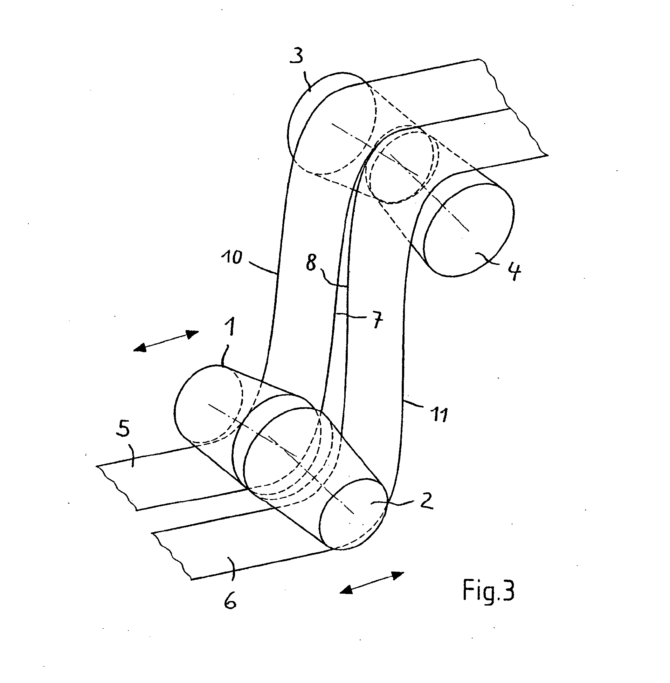

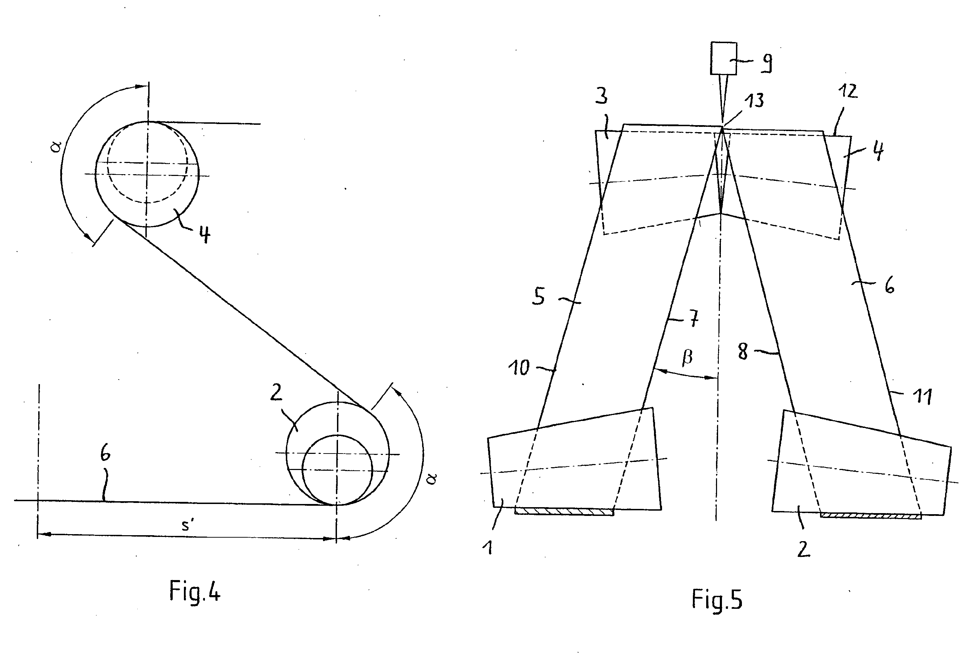

Die in den Figuren 1 bis 5 dargestellte Vorrichtung umfasst zueinander versetzt, vorzugsweise höhenversetzt angeordnete Umlenkrollen 1, 2, 3, 4 zum Führen von Bändern 5, 6, die entlang ihrer Längskanten 7, 8 im Stumpfstoß aneinander gefügt werden sollen. Bei den Bändern 5, 6 handelt es sich um flache, d.h. im Wesentlichen zweidimensionale Metallbänder, beispielsweise um Stahl- oder Aluminiumbänder. Die Bänder 5, 6 können eine unterschiedliche Dicke, Breite und/oder Materialgüte aufweisen. In Fig. 5 sind beispielhaft Bänder 5, 6 unterschiedlicher Dicke dargestellt.

Die Bänder 5, 6 werden üblicherweise von einem Coil in einer Haspelstation (nicht gezeigt) abgewickelt und über die Umlenkrollen 1, 2, 3, 4 einer Fügeeinrichtung 9, beispielsweise einer Hochfrequenz-Schweißeinrichtung oder einer Laserschweißeinrichtung zugeführt. Der Füge- oder Schweißpunkt ist in Fig. 2 durch den mit dem Bezugszeichen P versehenen Pfeil markiert. Beim Hochfrequenzschweißen muss ein realer Nullspalt vorliegen, der mittels einer definierten Kraft im Berührungspunkt eingestellt werden kann (spaltlos). Beim Laserschweißen-muss ein technischer Nullspalt für eine einwandfreie Schweißnaht vorliegen.

Ausgehend von den Haspelstationen (nicht gezeigt) laufen die Bänder 5, 6 zunächst im Wesentlichen parallel und mit Abstand zueinander in Richtung der Umlenkrollen 1, 2. Die Umlenkrollen 1, 2 sind als Konusrollen ausgeführt. Mittels der Konusrollen 1, 2 werden die Bänder 5, 6 zu den nachfolgenden Konusrollen 3, 4 umgelenkt. Die Konusrollen 1, 2 verjüngen sich in Richtung der äußeren, nicht miteinander zu verschweißenden Längskanten 10, 11 der Bänder 5, 6. Durch die entgegengesetzt ausgerichtete Verjüngung der Konusrollen 1, 2 laufen die Bänder 5, 6 in Richtung der nachfolgenden Konusrollen 3, 4 aufeinander zu. Die der Fügestelle (Fügepunkt P) näher liegenden Konusrollen 3, 4 verjüngen sich in Richtung der miteinander zu verschweißenden Längskanten 7, 8 der Bänder 5, 6. Wie insbesondere in den Figuren 1, 2, 4 und 5 zu erkennen ist, sind die Drehachsen der Konusrollen 3, 4 gegeneinander so angestellt, dass die Mantelflächen der Konusrollen 3, 4 im Bereich des Ablaufes der Bänder 5, 6 von den Rollen 3, 4 in einer gemeinsamen Bandtransportebene 12 liegen.

Vorzugsweise ist mindestens eine der der Fügestelle P näherliegenden Konusrollen 3, 4 als höhenbewegliche Konusrolle ausgeführt. Durch eine Höhenverstellung der Konusrollen 3, 4 relativ zueinander kann beim Verschweißen von Bändern 5, 6 unterschiedlicher Dicke die Lage des Dickensprungs 13 beeinflusst werden (vgl. Fig. 5).

Da bei der Anordnung gemäß Fig. 5 die Drehachsen der Konusrollen 3, 4 gegeneinander so angestellt sind, dass die Mantelflächen der Konusrollen 3, 4-in einer gemeinsamen Bandtransportebene 12 liegen, befindet sich bei dieser Anordnung der Dickensprung 13 auf der den Konusrollen 3, 4 abgewandten Bandseite. Durch eine Höhenverstellung der Konusrollen 3, 4 relativ zueinander kann allerdings auch eine Rollenanordnung erzielt werden, bei welcher die Mantelflächen der Konusrollen 3, 4 in unterschiedlichen, zueinander parallelen Bandtransportebenen liegen. Beispielsweise lassen sich die Drehachsen der Konusrollen 3, 4 der erfindungsgemäßen Vorrichtung derart zueinander positionieren, dass sich auf beiden Bandseiten der miteinander verschweißten Bänder jeweils ein Dickensprung ergibt. Ferner liegt es im Rahmen des erfindungsgemäßen Verfahrens, die Lage der Konusrollen 3, 4 relativ zueinander während des Füge- bzw. Schweißprozesses zu verstellen, so dass sich an dem aus den Bändern 5, 6 hergestellten Band ein Dickensprungwechsel von der einen Bandseite zur anderen Bandseite und gegebenenfalls wieder zurück, insbesondere ein sinusförmiger Dickensprungwechsel ergibt.

Alternativ oder ergänzend zu einer Höhenverstellbarkeit der Konusrollen 3, 4 zur Wahl der Lage des Dickensprungs können den Konusrollen 3, 4 in Laufrichtung der Bänder 5, 6 Spannrollen (nicht gezeigt) nachgeordnet sein, die relativ zueinander höhenverstellbar sind. Mittels solcher höhenverstellbarer Spannrollen kann ebenfalls die Lage des Dickensprungs beeinflusst werden.

Die Stelle, an der die miteinander zu verschweißenden Längskanten 7, 8 der Bänder 5, 6 aneinanderstoßen, befindet sich an oder kurz vor der Stelle, an welcher die Mantelflächen der Konusrollen 3, 4 in der gemeinsamen Bandtransportebene 12 bzw. in den zueinander parallelen Bandtransportebenen liegen. Anschließend laufen die Bänder 5, 6 mit aneinanderliegenden bzw. aneinander gefügten Längskanten 7, 8 parallel weiter.

Vorzugsweise werden die Bänder 5, 6 in ihrem Berührungspunkt, also an der Stelle, an welcher die Mantelflächen der Konusrollen 3, 4 in der gemeinsamen Bandtransportebene bzw. in den zueinander parallelen Bandtransportebenen liegen, verschweißt. Es liegt jedoch auch im Rahmen der Erfindung, den Füge- bzw. Schweißpunkt P weiter beabstandet von dem ersten Berührungspunkt der Bänder 5, 6 vorzusehen.

Der Fügewinkel (Öffnungswinkel) β ist eine Funktion des Konuswinkels γ sowie des Umschlingungswinkels α des Bandes 5. bzw. 6 an der jeweiligen Konusrolle 1, 2, 3, 4. Der Fügewinkel β wird insbesondere konstruktiv durch die Verwendung von einen bestimmten Konuswinkel γ aufweisenden Konusrollen 3, 4 voreingestellt (vgl. Fig. 2).

Darüber hinaus sind die Konusrollen 1, 2 achsbeweglich gelagert, so dass sie axial sowie im Wesentlichen radial, insbesondere horizontal verschiebbar sind. Durch Verschiebung bzw. Positionsänderung der Konusrollen 1, 2 gegenüber den nachfolgenden Konusrollen 3, 4 wird die Umschlingung des Bandes 5, 6 um die Konusrolle, also der Umschlingungswinkel α des Bandes 5 bzw. 6 an den Konusrollen 1, 3 bzw. 2, 4 und damit gleichzeitig der Fügewinkel (Öffnungswinkel) β geändert.

In dem in Fig. 1 dargestellten Ausführungsbeispiel beträgt der Umschlingungswinkel α ca. 90°. Der Konuswinkel γ der der Fügestelle P nächstliegenden Konusrolle 3, 4 liegt im Bereich von 5° bis 10° und beträgt beispielsweise ca. 7°. Der Fügewinkel β beträgt in diesem Fall ca. 3,5°.

Durch Verschiebung der unteren Konusrollen 1, 2 um eine Strecke s' wird der Umschlingungswinkel α vergrößert. Dabei wird gleichzeitig der Abstand der unteren Konusrollen 1, 2 zueinander sowie der Fügewinkel β vergrößert (vgl. Figuren 4 und 5). Mit zunehmendem Umschlingungswinkel α vergrößert sich der Fügewinkel β. Die Lage des Füge- bzw. Schweißpunktes P ändert sich dabei nicht.

Die erfindungsgemäße Vorrichtung ermöglicht somit durch Veränderung der Lage der Konusrollen 1, 2 gegenüber den nachfolgenden Konusrollen 3, 4 eine Änderung des Umschlingungswinkels α bzw. Fügewinkels β. Insbesondere lässt sich durch Änderung der Lage der Konusrollen 1, 2 gegenüber den nachfolgenden Konusrollen 3, 4 die an den aneinanderstoßenden Längskanten 7, 8 der Bänder 5, 6 wirksame Anpresskraft (Fügekraft) beeinflussen, insbesondere zur Einstellung eines realen Nullspaltes eine definierte Kraft einstellen.

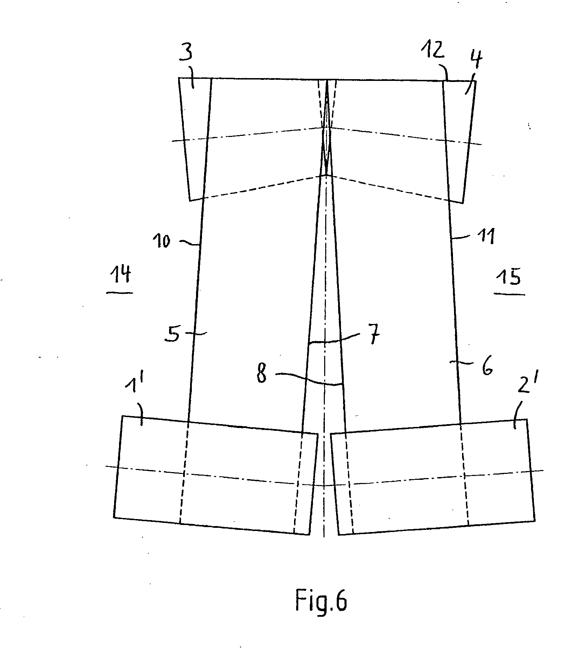

Das in Fig. 6 dargestellte Ausführungsbeispiel der erfindungsgemäßen Vorrichtung unterscheidet sich von dem Ausführungsbeispiel gemäß den Figuren 1 bis 5 dadurch, dass die den Konusrollen 3, 4 in Laufrichtung der Bänder 5, 6 vorgeordneten Umlenkrollen 1', 2' als Umlenkrolle mit zylindrischer Mantelfläche ausgeführt sind. Die Konusrollen 3, 4 und die zylindrischen Umlenkrollen 1', 2' sind dabei bezogen auf das jeweilige Band so angeordnet, dass die Drehachse der zylindrischen Umlenkrolle 1' bzw. 2' sich der Drehachse der in Bandlaufrichtung nachfolgenden Konusrolle 3 bzw. 4 auf der der zu verschweißenden Längskante 7 bzw. 8 gegenüberliegenden Kantenseite 14 bzw. 15 des Bandes 5 bzw. 6 räumlich annähert. Die Drehachsen der zylindrischen Umlenkrollen 1', 2' bilden zusammen einen stumpfen Winkel. Die Konusrollen 3, 4 sind wiederum so gegeneinander angestellt, dass ihre Mantelflächen in einer gemeinsamen Bandtransportebene 12 liegen.

Die erfindungsgemäße Vorrichtung gemäß den Figuren 1 bis 5 bzw. der Fig. 6 kann ferner mit Bandkantenregelungseinrichtungen (nicht gezeigt) versehen sein, die eine Positionierung der miteinander zu verschweißenden Längskanten (Fügekanten) 7, 8 in der Anlagenmitte bewirken.

Die Ausführung der Erfindung ist nicht auf die vorstehend beschriebenen und in der Zeichnung dargestellten Ausführungsbeispiele beschränkt. Vielmehr sind mehrere Varianten denkbar, die auch bei grundsätzlich abweichender Ausgestaltung von der in den beiliegenden Ansprüchen angegebenen Erfindung Gebrauch machen. So können beispielsweise die Umlenk- bzw. Konusrollen 1, 2, 3, 4 bzw. 1', 2', 3, 4 auch so angeordnet werden, dass die zunächst parallel mit Abstand zueinander laufenden Bänder 5, 6 über die konischen bzw. zylindrischen Umlenkrollen 1, 2 bzw. 1', 2' nach unten geleitet werden. Auch in diesem Fall wird aber durch eine geeignete räumliche Anordnung der konischen bzw. zylindrischen Umlenkrollen 1, 2 bzw. 1', 2' sichergestellt, dass die Bänder 5, 6 anschließend aufeinander zulaufen und sich im Bereich der gemeinsamen Bandtransportebene 12 bzw. der zueinander parallelen Bandtransportebenen der dann tiefer angeordneten Konusrollen 3, 4 berühren.

Ferner lassen sich die Vorteile der erfindungsgemäßen Vorrichtung auch schon nutzen, wenn lediglich eine Hälfte der in den Figuren 1 bis 5 bzw. 6 dargestellten Rollenanordnungen, also die Rollenanordnung für eines der beiden Bänder 5 oder 6, mit einer abweichend gestalteten Bandführung für das andere Band 6 bzw. 5 kombiniert wird. So kann beispielsweise ein herkömmlicher Rollengang (nicht gezeigt) zur Führung eines der Bänder 5 oder 6 mit einer erfindungsgemäßen Rollenanordnung umfassend zwei in Laufrichtung des Bandes 6 bzw. 5 aufeinanderfolgende, in entgegengesetzte Richtungen sich verjüngende Konusrollen 2, 4 oder 1, 3 kombiniert werden, wobei sich die in Laufrichtung des Bandes 5 oder 6 gesehen erste Konusrolle 1 oder 2 zur äußeren, nicht zu verschweißenden Längskante 10 oder 11 des Bandes 5 bzw. 6 verjüngt und die Mantelfläche der nachfolgenden Konusrolle 3 bzw. 4 zusammen mit der Mantelfläche einer benachbarten zylindrischen Rolle (nicht gezeigt) des Rollengangs in einer gemeinsamen Bandtransportebene 12 liegt.

## Patentansprüche

1. Vorrichtung zum Führen von miteinander entlang ihrer Längskanten (7, 8) zu fügender Bänder (5, 6), mit mindestens zwei zueinander versetzt angeordneten Umlenkrollen (1, 3; 2, 4; 1' , 3; 2', 4) für mindestens eines der Bänder, **dadurch gekennzeichnet, dass** die einer Fügestelle (P) näherliegende Umlenkrolle (3, 4) als Konusrolle ausgeführt ist, die sich in Richtung der zu fügenden Längskante (7, 8) des Bandes verjüngt, wobei die dieser Konusrolle (3, 4) in Laufrichtung des Bandes vorgeordnete Umlenkrolle (1, 2) ebenfalls als Konusrolle oder als Umlenkrolle (1', 2') mit zylindrischer Mantelfläche ausgeführt ist, und wobei sich die letztgenannte Konusrolle (1, 2) in Richtung der anderen Längskante (10, 11) des Bandes (5, 6) verjüngt oder die Drehachse der eine zylindrische Mantelfläche aufweisenden Umlenkrolle (1', 2') sich der Drehachse der in Laufrichtung des Bandes nachgeordneten Konusrolle (3, 4) auf der der zu fügenden Längskante (7, 8) gegenüberliegenden Kantenseite (14, 15) des Bandes (5, 6) räumlich annähert.

2. Vorrichtung nach Anspruch 1, **dadurch gekennzeichnet, dass** mindestens eine der Umlenkrollen (1, 2; 1', 2')als achsbeweglich steuerbare Umlenkrolle oder Konusrolle ausgeführt ist, so dass sie im Wesentlichen radial, insbesondere horizontal verschiebbar ist.

3. Vorrichtung nach Anspruch 1 oder 2, **dadurch gekennzeichnet, dass** die der Fügestelle (P) näherliegende Konusrolle (3, 4) als höhenbewegliche Konusrolle ausgeführt ist.

4. Vorrichtung nach einem der Ansprüche 1 bis 3, **dadurch gekennzeichnet, dass** mindestens zwei weitere zueinander versetzt angeordnete Umlenkrollen (1, 3 bzw. 2, 4; 1', 3 bzw. 2', 4) für das zweite Band (5 bzw. 6) der miteinander zu fügenden Bänder (5, 6) vorhanden sind, wobei die der Fügestelle (P) näherliegende Umlenkrolle (3 bzw. 4) als-Konusrolle ausgeführt ist, die sich in Richtung der zu fügenden Längskante des zweiten Bandes verjüngt, wobei die dieser Konusrolle (3 bzw. 4) in Laufrichtung des zweiten Bandes vorgeordnete Umlenkrolle (1, 1' bzw. 2, 2') ebenfalls als Konusrolle (1 bzw. 2) oder als Umlenkrolle (1' bzw. 2') mit zylindrischer Mantelfläche ausgeführt ist, und wobei sich diese letztgenannte Konusrolle (1 bzw. 2) in Richtung der anderen Längskante (10 bzw. 11) des zweiten Bandes (5; 6) verjüngt oder die Drehachse der eine zylindrische Mantelfläche aufweisenden Umlenkrolle (1' bzw. 2') sich der Drehachse der in Laufrichtung des zweiten Bandes (5; 6) nachgeordneten Konusrolle (3; 4) auf der der zu fügenden Längskante (7; 8) gegenüberliegenden Kantenseite (14; 15) des zweiten Bandes (5; 6) räumlich annähert.

5. Vorrichtung nach Anspruch 4, **dadurch gekennzeichnet, dass** die Mantelflächen der der Fügestelle (P) näherliegenden Konusrollen (3, 4) in einer gemeinsamen Ebene (12) liegen.

6. Vorrichtung nach Anspruch 4 oder 5, **dadurch gekennzeichnet, dass** den der Fügestelle (P) näherliegenden Konusrollen (3, 4) in Laufrichtung der miteinander zu fügenden Bänder (5, 6) Spannrollen nachgeordnet sind, die relativ zueinander höhenverstellbar sind.

7. Verfahren zum Führen von miteinander entlang ihrer Längskanten (7, 8) zu fügender Bänder (5, 6), bei dem im Wesentlichen parallel mit Abstand zueinander laufende Bänder über Umlenkrollen zu einer Fügestelle (P) geleitet werden, **dadurch gekennzeichnet, dass** mindestens eines der Bänder (5, 6) mittels einer Konusrolle (1, 2) oder einer eine zylindrische Mantelfläche aufweisenden Umlenkrolle (1', 2') derart umgelenkt wird, dass es auf das andere Band zuläuft und mit letzterem einen keilförmigen Fügewinkel (β) definiert, wobei das umgelenkte Band (5, 6) sodann mittels einer Konusrolle (3, 4), die sich in Richtung der zu fügenden Längskante (7, 8) des Bandes (5, 6) verjüngt, derart umgelenkt wird, dass sich die zu fügenden Bänder (5, 6) entlang ihrer Längskanten (7, 8) berühren und dann parallel zueinender laufen.

8. Verfahren nach Anspruch 7, **dadurch gekennzeichnet, dass** die Bänder (5, 6) jeweils mittels einer Konusrolle (1, 2) oder einer eine zylindrische Mantelfläche aufweisenden Umlenkrolle (1', 2') derart umgelenkt werden, dass sie auf das andere Band (5 bzw. 6) zulaufen und zusammen einen keilförmigen Fügewinkel (β) definieren, wobei die umgelenkten Bänder sodann jeweils mittels einer Konusrolle (3, 4), die sich in Richtung der zu fügenden Längskante (7, 8) des jeweiligen Bandes verjüngt, derart umgelenkt werden, dass sich die zu fügenden Bänder (5, 6) entlang ihrer Längskanten (7, 8) berühren und dann parallel zueinender laufen.

9. Verfahren nach Anspruch 7 oder 8, **dadurch gekennzeichnet, dass** der Fügewinkel (β) durch radiales, insbesondere horizontales Verschieben der Umlenkrolle oder Umlenkrollen (1, 2; 1', 2') gegenüber der oder den der Fügestelle (P) näherliegenden Konusrollen (3, 4) eingestellt wird.

10. Verfahren nach Anspruch 8 oder 9, **dadurch gekennzeichnet, dass** der Fügewinkel (β) durch Verändern der Umschlingungswinkel (α) der Bänder (5, 6) an den Umlenkrollen und/oder Konusrollen (1, 2, 3, 4; 1', 2', 3, 4) eingestellt wird.

11. Verfahren nach Anspruch 9 oder 10, **dadurch gekennzeichnet, dass** durch Änderung der Lage der Konusrollen (1, 2) gegenüber den nachfolgenden Konusrollen (3, 4) an den aneinanderstossenden Längskanten (7, 8) der Bänder (5, 6) eine definierte Kraft eingestellt wird.

## Claims

1. A device for guiding bands (5, 6) to be joined to each other along the longitudinal edges (7, 8) thereof, having at least two guide rollers (1, 3; 2, 4; 1', 3; 2', 4) arranged offset to each other for at least one of the bands, **characterized in that** the guide roller (3, 4) closer to a joining point (P) is designed as a conical roller, which tapers in the direction of the longitudinal edge (7, 8) of the band to be joined, wherein the guide roller (1, 2) upstream of said conical roller (3, 4) in the running direction of the band is also designed as a conical roller or as a guide roller (1', 2') having a cylindrical lateral face, and wherein the last-mentioned conical roller (1, 2) tapers in the direction of the other longitudinal edge (10, 11) of the band (5, 6) or the axis of rotation of the guide roller (1' 2') having a cylindrical lateral space spatially approaches the axis of rotation of the conical roller (3, 4) downstream in the running direction of the band on the side edge (14, 15) of the band (5, 6) lying opposite the longitudinal edge (7, 8) to be joined.

2. A device according to claim 1, **characterized in that** at least one of the guide rollers (1, 2; 1', 2') is designed as an axially movable controllable guide roller or conical roller, so that it is radially, particularly horizontally movable.

3. A device according to claim 1 or 2, **characterized in that** the conical roller (3, 4) closer to the joining point (P) is designed as a height-adjustable conical roller.

4. A device according to one of claims 1 to 3, **characterized in that** at least two additional guide rollers (1, 3 or 2, 4; 1', 3 or 2', 4) arranged offset to each other are available for the second band (5 or 6) of the bands (5, 6) to be joined to each other, wherein the guide roller (3 or 4) closer to the joining point (P) is designed as a conical roller, which tapers in the direction of the longitudinal edge of the second band to be joined, wherein the guide roller (1, 1' or 2, 2') upstream of this conical roller (3 or 4) in the running direction of the second band is also designed as a conical roller (1 or 2) or as a guide roller (1' or 2') having a cylindrical lateral face, and wherein said last-mentioned conical roller (1 or 2) tapers in the direction of the other longitudinal edge (10 or 11) of the second band (5; 6) or the axis of rotation of the guide roller (1' or 2') having a cylindrical lateral face spatially approaches the axis of rotation conical roller (3; 4) downstream in the running direction of the second band (5; 6) on the side edge (14; 15) of the second band (5; 6) lying opposite the longitudinal edge (7; 8) to be joined.

5. A device according to claim 4, **characterized in that** the lateral faces of the conical rollers (3, 4) closer to the joining point (P) lie in a common plane (12).

6. A device according to claim 4 or 5, **characterized in that** tension rollers, which are height adjustable relative to each other, are downstream to the conical rollers (3, 4) closer to the joining point (P) in the running direction of the bands (5,6) to be joined with each other.

7. A method for guiding bands (5, 6) to be joined to each other along the longitudinal edges (7, 8) thereof, in which bands running substantially parallel to and spaced from one another are directed via guide rollers to a joining point (P), **characterized in that** at least one of the bands (5, 6) is guided by means of a conical roller (1, 2) or by means of guide roller (1', 2') having a cylindrical lateral face such that it runs up to the other band and with the latter defines a wedge-shaped joining angle (β), wherein the guided band (5, 6) is then guided by means of a conical roller (3, 4), which tapers in the direction of the longitudinal edge (7, 8) of the band (5, 6) to be joined, such that the bands (5, 6) to be joined touch along their longitudinal edges (7, 8) and then run parallel to each other.

8. A method according to claim 7, **characterized in that** the bands (5, 6) are each guided by means of a conical roller (1, 2) or by means of a guide roller (1', 2') having a cylindrical lateral face such that they run up to the other band (5 or 6) and together define a wedge-shaped joining angle (β), wherein the guided bands are then each guided by means of a conical roller (3, 4), which tapers in the direction of the longitudinal edge (7, 8) of the respective band to be joined, such that the bands (5, 6) to be joined touch along their longitudinal edges (7, 8) and then run parallel to each other.

9. A method according to claim 7 or 8, **characterized in that** the joining angle (β) is adjusted by radially, particularly horizontally shifting of the guide roller or guide rollers (1, 2; 1', 2') with respect to the conical roller or rollers (3, 4) closer to the joining point (P).

10. A method according to claim 8 or 9, **characterized in that** the joining angle (β) is adjusted by changing the wrap angle (α) of the bands (5, 6) on the guide rollers and/or conical rollers (1, 2, 3, 4; 1', 2', 3, 4).

11. A method according to claim 9 or 10, **characterized in that** a defined force is adjusted by changing the position of the conical rollers (1, 2) with respect to the subsequent conical rollers (3, 4) on the abutting longitudinal edges (7, 8) of the bands (5, 6).

## Revendications

1. Dispositif de guidage de bandes (5, 6) à joindre entre elles le long de leurs arêtes longitudinales (7, 8), avec au moins deux galets de renvoi (1, 3 ; 2, 4 ; 1', 3 ; 2', 4) disposés de manière décalée entre eux, pour au moins une des bandes, **caractérisé en ce que** le galet de renvoi (3, 4) le plus proche d'un point de jonction (P) est conçu comme un galet conique, qui se rétrécit en direction de l'arête longitudinale (7, 8) de la bande, le galet de renvoi (1, 2) disposé en amont de ce galet conique (3, 4) dans la direction de déplacement de la bande est également conçu comme un galet conique ou comme un galet de renvoi (1', 2') avec surface de revêtement cylindrique et ce dernier galet conique (1, 2) se rétrécit dans la direction de l'autre arête longitudinale (10, 11) de la bande (5, 6) ou l'axe de rotation du galet de renvoi (1', 2') comprenant une surface de revêtement cylindrique se rapprochant de l'axe de rotation du galet conique (3, 4) disposé en aval dans la direction de déplacement de la bande sur le côté d'arête (14, 15) de la bande (5, 6), opposé à l'arête longitudinale (7, 8) à joindre.

2. Dispositif selon la revendication 1, **caractérisé en ce qu'**au moins un des galets de renvoi (1, 2 ; 1', 2') est conçu comme un galet de renvoi ou un galet conique contrôlable de manière mobile sur l'axe, de façon à ce qu'il puisse être coulissé essentiellement radialement, plus particulièrement horizontalement.

3. Dispositif selon la revendication 1 ou 2, **caractérisé en ce que** le galet conique (3, 4) le plus proche du point de jonction (P) est conçu comme un galet conique mobile en hauteur.

4. Dispositif selon l'une des revendications 1 à 3, **caractérisé en ce qu'**au moins deux autres galets de renvoi (1, 3 ou 2, 4 ; 1', 3 ou 2', 4) disposés de manière décalés entre eux sont prévus pour la deuxième bande (5 ou 6) des bandes (5, 6) à joindre entre elles, le galet de renvoi (3 ou 4) la plus proche du point de jonction (P) est conçu comme un galet conique, qui se rétrécit dans la direction de l'arête longitudinale à joindre de la deuxième bande, le galet de renvoi (1, 1' ou 2, 2') disposé en amont de ce galet conique (3 ou 4) dans la direction de déplacement de la deuxième bande étant conçu également comme un galet conique (1 ou 2) ou comme un galet de renvoi (1' ou 2') avec une surface de revêtement cylindrique et ce dernier galet conique (1 ou 2) se rétrécissant en direction de l'autre arête longitudinale (10 ou 11) de la deuxième bande (5 ; 6) ou l'axe de rotation du galet de renvoi (1' ou 2') comprenant une surface de revêtement cylindrique se rapprochant de l'axe de rotation du galet conique (3 ; 4) disposé en aval dans la direction de déplacement de la deuxième bande (5 ; 6) sur le côté d'arête (14 ; 15) de la deuxième bande (5 ; 6), opposée à l'arête longitudinale (7 ; 8) à joindre.

5. Dispositif selon la revendication 4, **caractérisé en ce que** les surfaces de revêtement des galets coniques (3 ,4) les plus proches du point de jonction (P) se trouvent sur un même plan (12).

6. Dispositif selon la revendication 4 ou 5, **caractérisé en ce que** des galets de tension sont disposés en aval des galets coniques (3, 4) les plus proches du point de jonction (P) dans la direction de déplacement des bandes (5, 6) à joindre, ces galets de tension étant réglables en hauteur entre eux.

7. Procédé de guidage de bandes (5, 6) à joindre entre elles le long de leurs arêtes longitudinales (7, 8), dans lequel des bandes globalement parallèles avec une certaine distance entre elles sont guidées par des galets de renvoi vers un point de jonction (P), **caractérisé en ce qu'**au moins une des bandes (5, 6) sont déviées à l'aide d'un galet conique (1, 2) ou d'un galet de renvoi (1', 2') comprenant une surface de revêtement, de telle sorte qu'elle rejoigne l'autre bande et définisse avec cette dernière un angle de jonction cunéiforme (β), la bande déviée (5, 6) étant alors déviée à l'aide d'un galet conique (3, 4) qui se rétrécit en direction de l'arête longitudinale (7, 8) à joindre de la bande (5, 6), de façon à ce que les bandes (5, 6) à joindre soient en contact le long de leurs arêtes longitudinales (7, 8) puis se déplacent de manière parallèle entre elles.

8. Procédé selon la revendication 7, **caractérisé en ce que** les bandes (5, 6) sont déviées à l'aide d'un galet conique (1, 2) ou d'un galet de renvoi (1', 2') comprenant une surface de revêtement cylindrique, de façon à ce qu'elles se rapprochent de l'autre bande (5 ou 6) et définissent entre elles un angle de jonction cunéiforme (β), les bandes déviées étant alors déviées à l'aide d'un galet conique (3, 4) qui se rétrécit en direction de l'arête longitudinale (7, 8) à joindre de la bande correspondante, de façon à ce que les bandes (5, 6) à joindre soient en contact le long de leurs arêtes longitudinales (7, 8) puis se déplacent de manière parallèle entre elles.

9. Procédé selon la revendication 7 ou 8, **caractérisé en ce que** l'angle de jonction (β) est ajusté à l'aide d'un coulissement radial, plus particulièrement horizontal, du galet de renvoi ou des galets de renvoi (1, 2 ; 1', 2') par rapport au(x) galet(s) de renvoi (3, 4) le(s) plus proche(s) du point de jonction (P).

10. Procédé selon la revendication 8 ou 9, **caractérisé en ce que** l'angle de jonction (β) est ajusté en modifiant l'angle d'enroulement (α) des bandes (5, 6) sur les galets de renvoi et/ou les galets coniques (1, 2, 3, 4 ; 1', 2', 3, 4).

11. Procédé selon la revendication 9 ou 10, **caractérisé en ce que** la modification de la position des galets coniques (1, 2) par rapport aux galets coniques (3, 4) suivants sur les arêtes longitudinales (7, 8), en contact entre elles, des bandes (5, 6), permet de régler une force définie.
